# EUROPÄISCHE PATENTSCHRIFT

(11) **EP 2 303 499 B1**
(45) Veröffentlichungstag und Bekanntmachung des Hinweises auf die Patenterteilung: **03.07.2019**
(21) Anmeldenummer: 09753304.6
(22) Anmeldetag: 24.04.2009
(51) Int. Cl.: B23K 9/04

(54) **VERFAHREN ZUR HERSTELLUNG EINER STRUKTUR AN EINER OBERFLÄCHE EINES METALLISCHEN WERKSTÜCKS**
METHOD FOR PRODUCING A STRUCTURE ON A SURFACE OF A METAL WORKPIECE
PROCÉDÉ POUR PRODUIRE UNE STRUCTURE SUR UNE SURFACE D'UNE PIÈCE MÉTALLIQUE

(30) Priorität: 28.05.2008 AT 8552008
(43) Veröffentlichungstag der Anmeldung: 06.04.2011
(73) Patentinhaber: Fronius International GmbH, 4643 Pettenbach (AT)
(72) Erfinder: ARTELSMAIR, Josef, A-4552 Wartberg (AT); KAZMAIER, Jörg, A-4600 Thalheim bei Wels (AT); KROISS, Uwe, A-4073 Wilhering (AT); STIEGLBAUER, Walter, A-4901 Manning (AT); TRAUNER, Gernot, A-4611 Buchkirchen (AT)
(74) Vertreter: Sonn & Partner Patentanwälte
(86) Internationale Anmeldenummer: PCT/AT2009/000165
(87) Internationale Veröffentlichungsnummer: WO 2009/143540

(56) Entgegenhaltungen:
- EP-A- 0 496 181
- EP-A- 1 354 658
- EP-A- 1 688 211
- DE-A1- 10 057 187
- US-A- 5 914 055
- US-E1- R E37 562

## Beschreibung

Die Erfindung betrifft ein Verfahren zur Herstellung einer dreidimensionalen Struktur an einer Oberfläche eines metallischen Werkstücks nach dem Oberbegriff des Anspruchs 1.

Aus der DE 100 57 187 A1 ist ein Verfahren für die Herstellung von Verbundaufbauten zwischen metallischen und nichtmetallischen Materialien bekannt, wobei auf einer Oberfläche eines metallischen Grundkörpers eine Haftschicht aufgebracht wird, auf die ein bevorzugt nichtmetallisches Material aufgetragen wird. Dabei wird die Haftschicht aus einzelnen Schweißpunkten bzw. Ankerpunkten durch jeweils einen Schweißprozess hergestellt, wobei bei dem Schweißprozess zur Bildung eines Schweißpunktes bzw. eines Ankerpunktes die Abschmelzung eines bevorzugt endlosen Schweißdrahtes derart erfolgt, dass der gebildete Schweißpunkt bzw. der Ankerpunkt eine bevorzugt kugelähnliche oder pilzähnliche Form an der Oberfläche des Grundkörpers ausbildet.

Nachteilig ist hierbei, dass die Gestalt der Schweißpunkte bzw. Ankerpunkte auf eine kugelähnliche bzw. pilzähnliche Form beschränkt ist und daher keine speziellen Geometrien herstellbar sind. Dadurch sind derartige Ankerpunkte nur für bestimmte Verbindungen von metallischen und nichtmetallischen Materialien geeignet. Es können im Wesentlichen nur solche nichtmetallische Materialien mit derartig ausgebildeten metallischen Materialien verbunden werden, welche verflüssigt werden können, sodass ein Umgießen bzw. Umspritzen der Ankerpunkte möglich ist. Nichtmetallische Materialien aus der Gruppe der Faserverbundwerkstoffe können auf diese Weise nicht wirtschaftlich mit solchen metallischen Materialien verbunden werden.

Auch können derartige eher stumpf ausgeführte Ankerpunkte nur mit erhöhtem Aufwand in teigige oder feste Werkstoffe eingedrückt werden, wie dies bei Verbindungen zwischen zwei metallischen Materialien erforderlich wäre.

Die Aufgabe der Erfindung besteht daher darin, ein oben genanntes Herstellungsverfahren zu schaffen, durch welches eine Oberflächenstruktur hergestellt werden kann, welche für verschiedene Anwendungen flexibel anpassbar ist. Nachteile bekannter Verfahren sollen vermieden oder zumindest reduziert werden.

Die Aufgabe der Erfindung wird dadurch gelöst, dass als Schweißprozess ein CMT-Schweißprozess verwendet wird, und dass nach einer definierten Anzahl von Schritten die weiteren Schritte mit einem anderen Material als Zusatzwerkstoff oder einem anderen Durchmesser für den Zusatzwerkstoff mit einem weiteren Schweißbrenner durchgeführt werden.

Dadurch, dass als Schweißprozess ein CMT (Cold Metal Transfer)-Schweißprozess verwendet wird, ist eine exakte Regelung der Wärmeeinbringung und Tropfenablöse möglich. Des Weiteren werden dadurch Strukturen mit konstanten Eigenschaften (wie die Höhe) erreicht, da die Kraft beim Zurückziehen des Zusatzwerkstoffes bzw. Schweißdrahtes immer gleich groß ist.

Vorteilhaft ist hierbei, dass Oberflächenstrukturen in beliebigen Formen, Richtungen und Größen realisierbar sind, und die Form der Strukturen an die jeweiligen Anwendungen entsprechend angepasst werden können. So sind zum Beispiel auch Strukturen für Verbindungen zweier metallischer Materialien bzw. Positionierhilfen und Distanzhilfen dazu herstellbar. Bei Verbindungen von nichtmetallischen Materialien, wie Faserverbundwerkstoffen, mit metallischen Materialien können sich die Fasern aufgrund der dafür angepassten Struktur ohne Schwierigkeiten um diese legen. Somit können dafür Techniken wie Einweben, Umgarnen oder Durchstechen von Vliesstoffen bzw. Matten angewandt werden.

Die ersten Schritte werden von einem ersten Schweißbrenner mit einem ersten Zusatzwerkstoff durchgeführt und die weiteren Schritte mit dem anderen Zusatzwerkstoff von einem weiteren Schweißbrenner. Des Weiteren können auch unterschiedliche Durchmesser für den Zusatzwerkstoff eingesetzt werden. Auch ist von Vorteil, dass eine bestehende mit Strukturen versehene Oberfläche jederzeit mit weiteren Strukturen ergänzt werden kann bzw. bestehende Strukturen verändert und ergänzt werden können. Dass zwischen den Herstellungsschritten eine definierte Zeitdauer gewartet wird, hat dabei den Vorteil, dass das zuvor geschweißte Einzelelement abkühlen kann.

Durch die Maßnahme, dass der Schweißzyklus jeweils mit der Zündung des Lichtbogens gestartet wird und vor einer Schweißpause derart beendet wird, dass die Bildung des Lichtbogens durch entsprechende Regelung der Schweißparameter unterdrückt wird, wird in vorteilhafter Weise erreicht, dass die Einzelelemente abkühlen können.

Dadurch, dass pro Schweißzyklus eine Einzelelement hergestellt wird, und mit diesem Einzelelement das im nächsten Schweißzyklus hergestellte Einzelelement verbunden wird, kann während des Aufbaus einer Struktur das Material und der Durchmesser des Zusatzwerkstoffes variiert werden.

Wenn die Anzahl der Schweißzyklen und die Wärmeeinbringung pro Schweißzyklus auf die Form und Größe der Struktur abgestimmt wird, kann die Zeitdauer zum Abkühlen der Einzelelemente je nach Form und Größe dieser Struktur variiert werden.

Von Vorteil ist auch, dass die Form und Größe der Einzelelemente der Struktur anhand der Schweißparameter pro Schweißzyklus festgelegt wird. Die für das Einzelelement erforderliche Menge an Zusatzwerkstoff wird durch die Wärmeeinbringung bestimmt, sodass die Form und Größe der Einzelelemente entsprechend variiert werden kann.

Bei einem automatisierten Schweißprozess wird vorzugsweise die Position des Schweißbrenners nach jedem Schweißzyklus für den folgenden Schweißzyklus angepasst. Dies erfolgt vorzugsweise während der Schweißpausen. Dadurch kann erreicht werden, dass folgende Einzelelemente der Struktur in einem definierten Winkel auf das zuvor hergestellte Einzelelement geschweißt werden, sodass nahezu jede beliebige Form für eine Struktur hergestellt werden kann.

Die vorliegende Erfindung wird anhand der beigefügten, schematischen Zeichnungen näher erläutert.

Darin zeigen:
Fig. 1 einen aus dem Stand der Technik bekannten Ablauf zur Herstellung einer Struktur an der Oberfläche eines metallischen Werkstücks;
Fig. 2 einen Ablauf zur Herstellung einer Struktur aus Einzelelementen;
Fig. 3 unterschiedliche aus Einzelelementen in Kugelform gebildete Strukturen;
Fig. 4 unterschiedliche aus Einzelelementen in kombinierten Formen gebildete Strukturen; und
Fig. 5 weitere aus einem Einzelelement gebildete Strukturen.

Einführend wird festgehalten, dass gleiche Teile der Ausführungsbeispiele mit gleichen Bezugszeichen versehen werden.

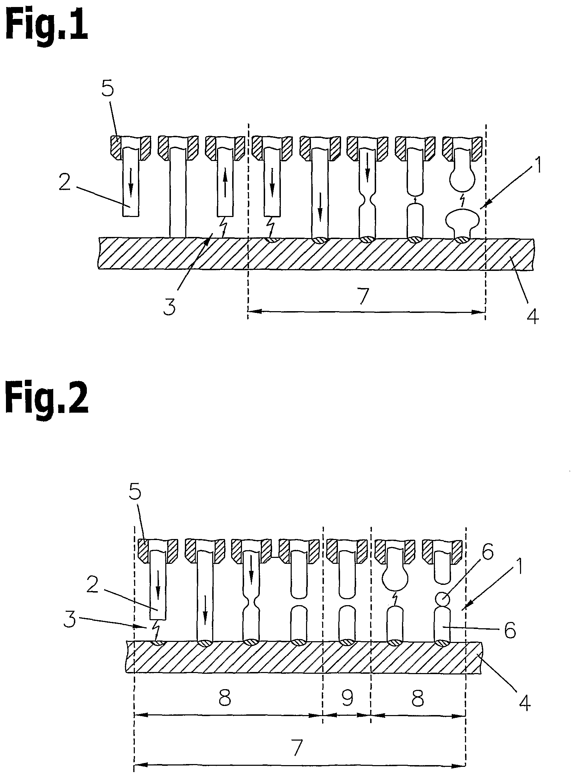

In Fig. 1 ist eine aus dem Stand der Technik bekannte Struktur 1 an der Oberfläche eines metallischen Werkstücks 4 dargestellt. Diese wird durch einen Schweißprozess 7, insbesondere Lichtbogenschweißprozess, hergestellt, unter Verwendung eines Zusatzwerkstoffs 2 bzw. Schweißdrahtes, der in einem Schweißbrenner 5 geführt wird. Der Zusatzwerkstoff 2 wird, wie durch die Pfeile angedeutet, zum Werkstück 4 bzw. vom Werkstück 4 weg bewegt und zwischen dem Zusatzwerkstoff 2 und dem Werkstück 4 ein Lichtbogen 3 gezündet. Die Herstellung der Struktur 1 erfolgt während eines einzigen durchgehenden Schweißprozesses 7, also ohne Schweißpause. Der Lichtbogen 3 zwischen Zusatzwerkstoff 2 und Werkstück 4 wird beispielsweise durch eine sogenannte Kontaktzündung vor dem eigentlichen Schweißprozess 7 gezündet. Der Lichtbogen 3 bewirkt sowohl eine Anschmelzung des Werkstücks 4 als auch des Zusatzwerkstoffs 2. Anschließend wird der Zusatzwerkstoff 2 zum Werkstück 4 bewegt und mit diesem verschweißt. Durch entsprechende Regelung der Schweißparameter, insbesondere des Schweißstroms und der Drahtbewegung, wird ein Steg gebildet, indem der Zusatzwerkstoff 2 im Wesentlichen in der Mitte zwischen Werkstück 4 und dem Austrittsende des Zusatzwerkstoffs 2 aus dem Schweißbrenner 5, auch "Stick-Out" genannt, durchgeschmolzen wird. Dabei entsteht wiederum ein Lichtbogen 3, welcher den Steg aufschmilzt und eine kugelähnliche bzw. pilzförmige Struktur 1 bildet. In ähnlicher Weise kann auch im Wesentlichen eine Kugel als Struktur 1 direkt auf der Oberfläche des Werkstücks 4 hergestellt werden.

Es können beliebige Strukturen 1 mit einem Schweißprozess 7 hergestellt werden, indem die Struktur 1 schrittweise aus mehreren Einzelelementen 6 hergestellt wird. Dadurch kann die Struktur 1 entsprechend der geforderten Anwendung hergestellt werden.

Somit kann das Verfahren im Wesentlichen für sämtliche Anwendungen eingesetzt werden. So können die Strukturen 1 als Distanzhalter, Positionierstift, Befestigungsvorrichtungen, Nieten oder Ösen, um beispielhaft einige Anwendungen zu nennen, eingesetzt werden. Zur Herstellung derartiger Strukturen 1 wird der Schweißprozess individuell angepasst. Das auf diesem Grundprinzip basierende Verfahren, welches im Folgenden im Detail beschrieben wird, wird dabei jedoch stets angewandt.

Das Grundprinzip beruht darauf, dass ein Schweißprozess 7 zur Herstellung einer beliebigen Struktur 1 an der Oberfläche des Werkstücks 4 in zumindest zwei Schweißzyklen 8 und eine Schweißpause 9 unterteilt wird, wie in Fig. 2 dargestellt. Ein Schweißzyklus 8 dient dabei zur Herstellung zumindest eines Einzelelements 6. Dazu ist es während eines Schweißzyklus 8 erforderlich, dass jeweils ein Lichtbogen 3 gezündet wird. Zwischen dem Auftragen bzw. Schweißen der Einzelelemente 6 auf das Werkstück 4 ist die Schweißpause 9 mit einer definierten Zeitdauer erforderlich. Diese Schweißpause 9 dient dazu, dass das zuvor gefertigte Einzelelement 6 entsprechend abgekühlt wird, sodass das im darauf folgenden Schweißzyklus 8 gefertigte Einzelelement 6 auf das abgekühlte Einzelelement 6 geschweißt werden kann. Durch die Dauer der Schweißpause 9 wird also definiert, wie sich die Einzelelemente 6 miteinander verbinden. Während einer Schweißpause 9 erfolgt keine Zündung des Lichtbogens 3. Dementsprechend wird am Ende eines Schweißzyklus 8 die Bildung eines Lichtbogens 3 unterdrückt, indem die Schweißparameter, wie Schweißstrom, Drahtvorschubgeschwindigkeit, usw., entsprechend geregelt werden.

Nach Beendigung des Schweißzyklus 8 - also vor dem Beginn der Schweißpause 9 - kann auch kurzzeitig eine Zündung des Lichtbogens 3 erfolgen. Dadurch kann die Oberfläche des Einzelelementes 6 für den nachfolgenden Schweißzyklus 8 entsprechend vorbereitet werden, indem die Form und Oberfläche des Einzelelementes 6 durch die kurzzeitige Zündung des Lichtbogens 3 verändert bzw. an das folgende Einzelelement 6 angepasst wird. Selbstverständlich kann eine derartige Bearbeitung eines Einzelelements 6 auch in einem Schweißzyklus 8 - also nach der Schweißpause 9 - durchgeführt werden.

Auf diese Weise wird die Struktur 1 aus den Einzelelementen 6 aufgebaut. Dabei werden die Einzelelemente 6 derart miteinander verschweißt, dass die zu fertigende Struktur 1 entsprechend der jeweiligen Anwendung gebildet wird. Zusammengefasst heißt das also, dass jedes Einzelelement 6 in einem Schweißzyklus 8 gefertigt wird, wobei die Fertigung eines Einzelelements 6 einem Schritt entspricht, sodass die Struktur 1 an der Oberfläche des Werkstücks 4 schrittweise aufgebaut wird.

Aus den Einzelelementen 6 können Formen gebildet werden, aus welchen die Struktur 1 zusammengesetzt wird. Eine Form kann dabei eine Kugel oder ein Steg sein. So kann eine Kugelform als Einzelelement 6 aus einem Tropfen des Zusatzwerkstoffes 2 gebildet werden, sodass im Wesentlichen eine kleine Kugelform entsteht. Soll eine größere Kugelform gefertigt werden, kann einerseits ein Zusatzwerkstoff 2 bzw. Schweißdraht größeren Durchmessers verwendet werden. Andererseits kann diese größere Kugelform auch aus mehreren Einzelelementen 6 gebildet werden, wobei die folgenden Einzelelemente 6 jeweils auf das zuvor gefertigte Einzelelement 6 geschweißt werden. Je nach Größe der Kugelform können hierbei auch mehrere Einzelelemente 6 direkt hintereinander geschweißt werden, bevor eine Schweißpause 9 eingelegt wird. Demnach wird eine größere Kugelform durch mehrere Einzelelemente 6 gebildet. Selbstverständlich können in weiterer Folge auf eine derartige Kugelform weitere Formen aufgeschweißt werden, sodass die gewünschte Struktur 1 schrittweise entsteht. Ausschlaggebend ist hierbei, dass das zuvor gefertigte Einzelelement 6 soweit abgekühlt ist, dass durch das folgende Einzelelement 6 die bestehende Form der Struktur 1 im Wesentlichen nicht verändert wird und trotzdem eine entsprechende Aufschmelzung für das folgende Einzelelement 6 erfolgt. Dies wird hauptsächlich über die Regelung der Wärmeeinbringung sowie der Schweißpause 9 erreicht. Somit können entsprechend diesem Verfahren Strukturen 1 aus beliebigen Formen zusammengesetzt werden, wobei die Formen schrittweise zumindest aus einem Einzelelement 6 - wie im Fall des Stegs - hergestellt
werden. Mit den Einzelelementen 6 können aber nicht nur Formen wie die angesprochene Kugel bzw. der Steg gebildet werden, sondern ebenso Formen wie eine Halbkugel, eine Pyramide, eine auf den Kopf gestellte Pyramide, eine Spitze bzw. ein Stachel, ein Streichholz usw. hergestellt werden. Diese Formen können nun die Struktur 1 direkt darstellen bzw. kann die Struktur 1 aus derartigen Formen zusammengesetzt werden. Hierbei können die Einzelelemente 6 durch entsprechende Aufschmelzung derart ineinander verschmelzen, dass die schrittweise gefertigten Einzelelemente 6 nicht mehr sichtbar sind.

Bevorzugt wird eine Struktur 1 auf einer größeren Fläche am Werkstück 4 mit einem automatisierten Schweißsystem aufgetragen. Dabei ist die gewählte Struktur 1 gleichmäßig bzw. entsprechend der Anwendung auf dieser Fläche aufgeteilt. Somit wird meist eine größere Anzahl gleicher Strukturen 1 geschweißt. Demzufolge werden bevorzugt durch einen Schweißversuch oder durch eine Simulation die Anzahl der erforderlichen Einzelelemente 6 pro Form, die jeweilige Schweißparameterkonfiguration, das "Stick-Out" (freies Drahtende), das Schutzgas bzw. Schutzgasgemisch, die Dauer der Schweißpause 9 und gegebenenfalls der Anstellwinkel des Schweißbrenners 5 ermittelt. Dabei beinhaltet die Schweißparameterkonfiguration die Wärmeeinbringung, insbesondere den Einbrand ins Werkstück 4 bzw. in das zuvor gefertigte Einzelelement 6, die Abschmelzleistung sowie Durchmesser des Zusatzwerkstoffs 2 bzw. Schweißdrahtes, die Drahtvorschubgeschwindigkeit, die Schweißstromhöhe sowie die Schweißspannung, um die wesentlichsten Schweißparameter zu nennen. Diese Schweißparameter werden entsprechend aufeinander abgestimmt, sodass die aus zumindest einem Einzelelement 6 bestehenden Formen der Struktur 1 hergestellt werden können. Dadurch wird also die Größe der Einzelelemente 6 bestimmt, welche in direktem Zusammenhang mit dem vom Zusatzwerkstoff 2 abgelösten Material steht.

Eine derartige Schweißparameterkonfiguration wird im Schweißgerät für jedes Einzelelement 6 und/oder für jede Form und/oder für jede Struktur 1 vorzugsweise gespeichert. Zusätzlich wird die nach jedem geschweißten Einzelelement 6 erforderliche Dauer der Schweißpause 9 gespeichert. Daraus resultiert eine Reihenfolge von Schritten, sodass die Struktur 1 anhand der Einzelelemente 6 schrittweise hergestellt werden kann. Die Speicherung kann beispielsweise jeweils als Kombination von Schweißzyklus 8 mit folgender Schweißpause 9, als ein sogenannter Job für die komplette Struktur 1 oder als Funktionsablauf erfolgen. Bei einem automatisierten Schweißsystem kann zusätzlich die erforderliche Position des Schweißbrenners 5 gespeichert werden, sodass das folgende Einzelelement 6 mit dem entsprechenden Winkel aufgeschweißt wird. Die Ausrichtung des Schweißbrenners 5 erfolgt dabei bevorzugt in der Schweißpause 9.

Der Ablauf zur Herstellung einer Fläche von Strukturen 1 kann dabei sehr individuell gestaltet werden bzw. wird dieser an die jeweilige Anwendung angepasst. Werden beispielsweise unterschiedliche Materialien für den Zusatzwerkstoff 2 zur Herstellung einer Struktur 1 benötigt, so können bevorzugt zuerst alle Strukturen 1 der Fläche mit dem ersten Material geschweißt werden und anschließend mit dem zweiten. Selbstverständlich können dazu auch zwei Schweißbrenner 5 eingesetzt werden. Analog dazu kann dies auch bei der Verwendung unterschiedlicher Schweißprozesse 7 bei einer Struktur 1 angewandt werden.

Beispielhaft werden in den folgenden Figuren unterschiedliche Strukturen 1 beschrieben, welche mit dem zuvor beschriebenen Verfahren hergestellt werden können. Dabei zeigen sämtliche Figuren jeweils Schnitte der dreidimensionalen Strukturen 1.

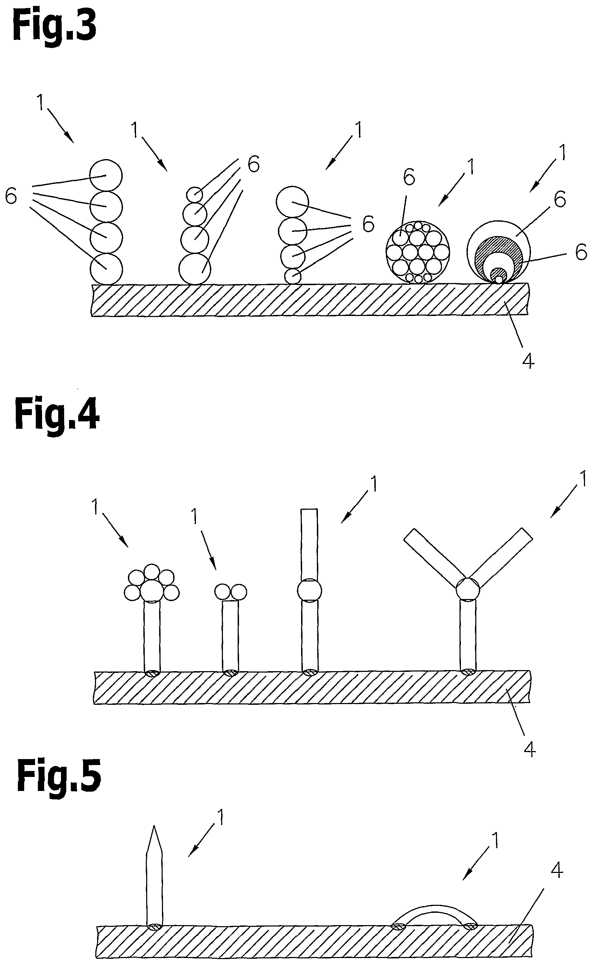

Fig. 3 zeigt unterschiedliche Strukturen 1, welche aus Einzelelementen 6 in Kugelform zusammengesetzt werden.

Entsprechend der Größe der Kugelformen werden diese aus jeweils einem Tropfen des Zusatzwerkstoffs 2 gefertigt oder die Kugelform wird aus mehreren Einzelelementen 6 gebildet, wie bereits zuvor angesprochen. Hierbei ist es auch denkbar, dass die Größe der Kugelformen aufsteigend bzw. absteigend ist. Selbstverständlich kann die Anzahl und Größe der Kugelformen beliebig gewählt werden.

Ist eine Kugelform erforderlich, welche durch Regelung der Schweißparameter mit einem Tropfen des Zusatzwerkstoffs 2 nicht mehr realisierbar ist, wird die Kugelform aus mehreren kleinen Kugelformen, also mehreren Einzelelementen 6, hergestellt, wie aus der ersten Kugelform in Fig. 3 ersichtlich. Eine derartige Kugelform kann aber auch bevorzugt derart hergestellt werden, dass das erste Einzelelement 6 im Wesentlichen als eine Kugelform gefertigt wird und die weiteren Einzelelemente 6 das zuvor gefertigte Einzelelement 6 bzw. die zuvor gefertigten Einzelelemente 6 oben und seitlich umschließen. Mit einer entsprechend angepassten Wärmeeinbringung kann erreicht werden, dass die geforderte Größe der Kugel entsteht, wie anhand der zweiten Kugelform in Fig. 3 ersichtlich.

Ebenso kann durch entsprechende Kombination von unterschiedlich großen Kugelformen auch eine Pyramide oder eine auf den Kopf gestellte Pyramide gefertigt werden (nicht dargestellt). Zur Beschleunigung der Herstellung derartiger Formen kann selbstverständlich auch zumindest ein Steg verwendet werden, an welchem entsprechende Kugelformen angeschweißt werden, sodass die gewünschte Form entsteht.

Auch ist eine Struktur 1 durch das Kombinieren von Formen, wie einem oder mehreren Steg(en) und Kugelformen möglich, wie in Fig. 4 dargestellt. Auch hier besteht jede Form aus zumindest einem Einzelelement 6, wobei insbesondere die Größe der Kugelform durch die Schweißparameter geregelt wird bzw. wie zu Fig. 3 beschrieben hergestellt wird.

Bei den Formen gemäß Fig. 4 ist jeweils das erste Einzelelement 6 als Steg ausgebildet. Der Steg wird gemäß Fig. 2 gebildet, besteht also im Wesentlichen aus einer definierten Länge des Zusatzwerkstoffs 2 bzw. Schweißdrahtes. Der Durchmesser des Stegs kann über den Durchmesser des Zusatzwerkstoffs 2 variiert werden.

Auf den Steg können eine oder mehrere Kugelformen aufgesetzt werden. Beispielsweise derart, dass mehrere Kugelformen eine Halbkugel bilden.

Ebenso können auch zumindest zwei Kugelformen auf einen Steg aufgesetzt und/oder seitlich angeschweißt werden, sodass im Wesentlichen eine T-Form entsteht.

Entsprechend können auch mehrere Stege mit zumindest einer Kugelform kombiniert werden. So kann eine Kugelform auf einen Steg geschweißt werden, wobei auf der Kugel wiederum ein Steg aufgesetzt wurde. Ebenso können auf die Kugelform auch zwei Stege aufgesetzt werden, sodass eine Y-Form gebildet wird. Entsprechend können noch weitere Stege auf die Kugelform aufgeschweißt werden, sodass die Struktur 1 eines Trichters entsteht. Selbstverständlich können derartige Strukturen 1 auch beliebig ergänzt werden, beispielsweise auf eine Kreuz-Form.

Aus diesen Strukturen 1 ist somit eindeutig ersichtlich, dass die Formen aus mehreren Einzelelementen 6 aufgebaut werden und die Struktur 1 schrittweise entsteht.

Ein Steg kann auch aus zwei Einzelelementen 6 aufgebaut werden. Dabei sind die Stege jeweils durch eine definierte Länge des Zusatzwerkstoffs 2 gebildet. Der wesentliche Unterschied zwischen den Stegen ist dabei das verwendete Material für den Zusatzwerkstoffs 2. Hier wird für den Steg, welcher mit dem Werkstück 4 verbunden ist, ein besonders starres Material verwendet, wogegen für den auf diesen Steg aufgesetzten Steg beispielsweise ein weicheres Material verwendet wird. Dies hat den Vorteil, dass eine derartige Struktur 1 auch als Niete verwendet werden kann. Dabei wird der weichere Steg entsprechend zusammengeschlagen oder zur Seite gebogen, sodass die Verbindung eines Teils mit dem Werkstück 4 gegeben ist.

Eine weitere Form für die Struktur 1 kann auch eine Spitze darstellen, wie in Fig. 5 gezeigt. Hierbei ist im Wesentlichen von Bedeutung, dass die Schweißparameter Strom, Spannung und Drahtvorschubgeschwindigkeit sowie Schutzgas und "Stick-Out" derart definiert eingesetzt werden, dass der Zusatzwerkstoff 2 in einem sogenannten teigigen Zustand eingeschnürt wird. In diesem Zustand kann der Zusatzwerkstoff 2 zu einer Spitze abgerissen werden, sodass eine Spitze als Struktur 1 entsteht. Im Wesentlichen wird ein Steg hergestellt, welcher nicht, wie bereits zuvor beschrieben, gerade abreißt, sondern durch Zurückziehen des Zusatzwerkstoffs 2 abreißt und eine Spitze bildet. Bei einer derartigen Regelung der Schweißparameter ist wesentlich, dass diese eine definierte Dauer anliegen, bevor sie auf den nächsten Wert geändert werden. Demzufolge wird die Struktur 1 in Form einer Spitze in einem Schritt hergestellt.

Selbstverständlich kann die Spitze auch in mehreren Schritten hergestellt werden. Beispielsweise derart, dass zuerst ein Steg, welcher gerade abgerissen wird, hergestellt wird und anschließend die Spitze, wie zuvor beschrieben, aufgesetzt wird.

Ebenso kann die Spitze eine Form einer Struktur 1 darstellen. So kann beispielsweise die eine in Fig. 4 dargestellte Y-Form für die Struktur 1 anstelle der auf der Kugelform aufgesetzten und gerade abgerissenen Stege jeweils durch eine Spitze ersetzt werden.

Generell hat die Spitze den Vorteil, dass sich dadurch sämtliche zur Gruppe der Faserverbundwerkstoffe gehörigen Materialien, welche bevorzugt durch die Strukturen 1 mit dem Werkstück 4 verbunden werden, ohne Schwierigkeiten um die Strukturen 1 legen können.

Ähnlich der Herstellung einer Spitze kann auch eine Öse hergestellt werden. Dabei wird im Wesentlichen wie bei einem Steg begonnen und zumindest ein Teil davon in einen teigigen Zustand versetzt, dass der Steg durch eine entsprechende Bewegung des Schweißbrenners 5 gebogen werden kann. Anschließend wird der Steg vom Zusatzwerkstoff 2 getrennt. Im nächsten Schritt wird das freie Ende des Stegs wiederum mit dem Werkstück 4, wie in Fig. 5 gezeigt, oder mit einer Struktur 1 verbunden.

Dieses Verfahren, also einen Steg in einen teigigen Zustand zu versetzen, kann auch zur Bildung einer speziellen Form für eine Struktur 1 verwendet werden. Beispielsweise derart, dass aus einem Steg eine L-Form gebildet wird. Auf diese Form kann dann wiederum eine beliebige Form aufgeschweißt werden.

Weiters ist es möglich, dass der Steg an dem Werkstück 4 angeschweißt wird, worauf in Abhängigkeit des "Stick-Outs" eine Erwärmung des Zusatzwerkstoffes 2 bzw. Schweißdrahtes an einer bestimmten Stelle erfolgt, wodurch der Zusatzwerkstoff 2 erwärmt wird und somit an dieser Stelle leicht verformt werden kann. Dabei wird für die Verformung eine entsprechende Bewegung mit dem Schweißbrenner 5 durchgeführt, und anschließend kann der Zusatzwerkstoff 2 abgeschmolzen werden. Somit ist es einfach möglich, einen Haken herzustellen.

Zu den beschriebenen Figuren sei zusammenfassend erwähnt, dass diese lediglich einen kleinen Auszug aus den Möglichkeiten dar stellen, die durch das Verfahren herstellbar sind. Eine derartige Vielfältigkeit ist insbesondere bei der Verwendung eines CMT (Cold Metal Transfer)-Schweißprozesses erreichbar. Dabei ist insbesondere eine exakte Regelung der Wärmeeinbringung, der Tropfenablöse sowie eine präzise Kraftregelung vor allem beim Durchschmelzen bzw. Durchreißen des aus dem Zusatzwerkstoff 2 bzw. Schweißdraht aufgebauten Steges möglich, wodurch nahezu jede Form für eine Struktur 1 gefertigt werden kann.

Im Allgemeinen sei noch erwähnt, dass derartige Strukturen 1 bevorzugt für Verbindungen zwischen Metallen und Kunststoffen, insbesondere kohlenstofffaserverstärkten Kunststoffen (CFK) Verwendung finden. Es sind aber auch Metall-Metall Verbindungen bzw. Anwendungen wie bereits eingangs erwähnt realisierbar.

## Patentansprüche

1. Verfahren zur Herstellung einer dreidimensionalen Struktur (1) an einer Oberfläche eines metallischen Werkstücks (4), welche Struktur (1) sich von der Oberfläche abhebt, wobei ein Schweißprozess (7) mit einem zumindest teilweise abschmelzenden Zusatzwerkstoff (2) eingesetzt wird, wobei während eines Schweißzyklus (8) des Schweißprozesses (7) zwischen dem in einem Schweißbrenner (5) geführten Zusatzwerkstoff (2) und dem Werkstück (4) ein Lichtbogen (3) gezündet wird und die Wärmeeinbringung während des Schweißprozesses (7) durch Regelung der Schweißparameter eingestellt wird, wobei die Struktur (1) aus einer Kombination beliebiger Formen zusammengesetzt wird, wobei jede Form schrittweise aus zumindest einem Einzelelement (6) hergestellt wird, wobei jedes Einzelelement (6) in einem Schweißzyklus (8) des Schweißprozesses (7) aus dem Zusatzwerkstoff (2) gefertigt wird und nach jedem Schweißzyklus (8) eine Schweißpause (9) eingelegt wird, wobei jeder Schweißzyklus (8) jeweils mit der Zündung des Lichtbogens (3) gestartet wird und vor der Schweißpause (9) derart beendet wird, dass die Bildung des Lichtbogens (3) durch entsprechende Regelung der Schweißparameter unterdrückt wird, und pro Schweißzyklus (8) ein Einzelelement (6) hergestellt und mit diesem Einzelelement (6) das im nächsten Schweißzyklus (8) hergestellte Einzelelement (6) verbunden wird, **dadurch gekennzeichnet, dass** als Schweißprozess (7) ein CMT-Schweißprozess verwendet wird, und dass nach einer definierten Anzahl von Schritten die weiteren Schritte mit einem anderen Material als Zusatzwerkstoff (2) oder einem anderen Durchmesser für den Zusatzwerkstoff (2) mit einem weiteren Schweißbrenner (5) durchgeführt werden.

2. Verfahren nach Anspruch 1, **dadurch gekennzeichnet, dass** die Anzahl der Schweißzyklen (8) und die Wärmeeinbringung pro Schweißzyklus (8) auf die Form und Größe der Struktur (1) abgestimmt wird.

3. Verfahren nach Anspruch 1 oder 2, **dadurch gekennzeichnet, dass** die Form und Größe der Einzelelemente (6) der Struktur (1) anhand der Schweißparameter pro Schweißzyklus (8) festgelegt wird.

4. Verfahren nach einem der Ansprüche 1 bis 3, **dadurch gekennzeichnet, dass** die für jedes Einzelelement (6) erforderliche Menge an Zusatzwerkstoff (2) durch die Wärmeeinbringung pro Schweißzyklus (8) bestimmt wird.

5. Verfahren nach einem der Ansprüche 1 bis 4, **dadurch gekennzeichnet, dass** bei einem automatisierten Schweißprozess (7) die Position des Schweißbrenners (5) nach jedem Schweißzyklus (8) für den folgenden Schweißzyklus (8) angepasst wird.

6. Verfahren nach Anspruch 5, **dadurch gekennzeichnet, dass** die Position des Schweißbrenners (5) während der Schweißpausen (9) angepasst wird.

## Claims

1. Method for producing a three-dimensional structure (1) on a surface of a metal workpiece (4), which structure (1) stands out from the surface, a welding process (7) with an at least partially melting filler material (2) being used, an arc (3) being ignited during a welding cycle (8) of the welding process (7) between the filler material (2) guided in a welding torch (5) and the workpiece (4), and the heat input during the welding process (7) being adjusted by regulating the welding parameters, the structure (1) being composed of a combination of any shapes, each shape being produced stepwise from at least one individual element (6), each individual element (6) in a welding cycle (8) of the welding process (7) being manufactured from the filler material (2) and a welding break (9) being inserted after each welding cycle (8), each welding cycle (8) being started by means of each ignition of the arc (3) and being ended before the welding break (9) in such a way that the formation of the arc (3) is suppressed by appropriate regulation of the welding parameters, and an individual element (6) being produced per welding cycle (8) and the individual element (6) produced in the next welding cycle (8) being connected to this individual element (6), **characterised in that** a CMT welding process is used as the welding process (7), and **in that** after a defined number of steps the further steps are carried out using another material as filler material (2) or using another diameter for the filler material (2) with a further welding torch (5).

2. Method according to claim 1, **characterised in that** the number of welding cycles (8) and the heat input per welding cycle (8) are matched with the shape and size of the structure (1).

3. Method according to either claim 1 or claim 2, **characterised in that** the shape and size of the individual elements (6) of the structure (1) are defined on the basis of the welding parameters per welding cycle (8).

4. Method according to any of claims 1 to 3, **characterised in that** the amount of filler material (2) required for each individual element (6) is determined by the heat input per welding cycle (8).

5. Method according to any of claims 1 to 4, **characterised in that** in an automated welding process (7) the position of the welding torch (5) after each welding cycle (8) is adapted for the following welding cycle (8).

6. Method according to claim 5, **characterised in that** the position of the welding torch (5) is adapted during the welding breaks (9).

## Revendications

1. Procédé pour la fabrication d'une structure tridimensionnelle (1) sur une surface d'une pièce métallique (4), cette structure (1) se distinguant de la surface, un processus de soudure (7) avec un additif (2) fondant au moins partiellement étant utilisé, un arc électrique (3) étant allumé pendant un cycle de soudure (8) du processus de soudure (7), entre l'additif (2) guidé dans un chalumeau de soudure (5) et la pièce (4), et l'apport de chaleur pendant le processus de soudure (7) étant ajusté par la régulation des paramètres de soudure, la structure (1) étant constituée d'une combinaison de formes quelconques, chaque forme étant fabriquée par étapes à partir d'au moins un élément individuel (6), chaque élément individuel (6) étant fabriqué dans un cycle de soudure (8) du processus de soudure (7) à partir de l'additif (2) et, après chaque cycle de soudure (8), une pause de soudure (9) étant respectée, chaque cycle de soudure (8) étant démarré avec l'allumage de l'arc électrique (3) et étant terminé avant la pause de soudure (9), de façon à ce que la formation de l'arc électrique (3) soit inhibée par une régulation correspondante des paramètres de soudure et, à chaque cycle de soudure (8), un élément individuel (6) est fabriqué et l'élément individuel (6) fabriqué lors du cycle de soudure (8) suivant est relié avec cet élément individuel (6), **caractérisé en ce que**, en tant que processus de soudure (7), un processus de soudure CMT est utilisé et **en ce que**, après un nombre défini d'étapes, les étapes supplémentaires sont effectuées avec un autre matériau en tant qu'additif (2) ou avec un diamètre différent pour l'additif (2) avec un autre chalumeau de soudure (5).

2. Procédé selon la revendication 1, **caractérisé en ce que** le nombre de cycles de soudure (8) et l'apport de chaleur par cycle de soudure (8) sont adaptés à la forme et à la taille de la structure (1).

3. Procédé selon la revendication 1 ou 2, **caractérisé en ce que** la forme et la taille des éléments individuels (6) de la structure (1) sont déterminés à l'aide des paramètres de soudure pour chaque cycle de soudure (8).

4. Procédé selon l'une des revendications 1 à 3, **caractérisé en ce que** la quantité d'additif (2) nécessaire pour chaque élément individuel (6) est déterminée à l'aide de l'apport de chaleur par cycle de soudure (8).

5. Procédé selon l'une des revendications 1 à 4, **caractérisé en ce que**, dans le cas d'un processus de soudure (7) automatisé, la position du chalumeau de soudure (5) est adaptée, après chaque cycle de soudure (8), pour le cycle de soudure (8) suivant.

6. Procédé selon la revendication 5, **caractérisé en ce que** la position du chalumeau de soudure (5) est adaptée pendant les pauses de soudure (9).
